# EUROPEAN PATENT SPECIFICATION

(11) **EP 0 318 665 B1**
(45) Date of publication and mention of the grant of the patent: **06.10.1993**
(21) Application number: 88116118.6
(22) Date of filing: 29.09.1988
(51) Int. Cl.: H04B 7/08

(54) **Antenna selection control circuit**
Steuerschaltung zur Antennenauswahl
Circuit de commande de sélection d'antenne

(30) Priority: 30.11.1987 US 126548
(43) Date of publication of application: 07.06.1989
(73) Proprietor: MOTOROLA, INC., Schaumburg Illinois 60196 (US)
(72) Inventor: Linder, Donald L., Palatine Illinois 60067 (US); Goode, Steve Howard, Palatine Illinois 60067 (US); Kazecki, Henry Ludwig, Des Plaines Illinois 60016 (US); Dennis, Donald William, Schaumburg Illinois 60195 (US); Baker, James Clark, Hanover Park Illinois 60103 (US)
(74) Representative: Ibbotson, Harold

(56) References cited:
- EP-A- 0 095 165
- EP-A- 0 124 319
- NTZ NACHRICHTENTECHNISCHE ZEITSCHRIFT. vol. 11, no. 6, June 1958, BERLIN DE pages 315 - 319; R.HEIDESTER et al.: "Untersuchungen zum Diversity-Empfang nach dem Antennen-Auswahl-System"

## Description

### Background Art

Radio receivers that make use of antenna selection diversity are known in the art see e.g. NTZ NACHRICHTENTECHNISCHE ZEITSCHRIFT. vol. 11, no. 6, June 1958, BERLIN DE pages 315 - 319; R.HEIDESTER et al.: "Untersuchungen zum Diversity-Empfang nach dem Antennen-Auswahl-System". In general, such a receiver makes use of a default antenna, and only makes use of the alternate antenna when the signal being received by the default antenna diminishes below an acceptable threshold (the threshold may either be a preselected constant or a value that fluctuates somewhat and represents, for example, an average value of the default antenna received signal). The criteria for measuring antenna performance may be, for example, a received signal strength indicator (RSSI).

Time division multiplexed (TDM) RF communications systems are also known in the art. Such systems divide information to be broadcast into packets, which packets are then broadcast in predetermined time slots. A typical TDM system establishes a short time frame (for example, a few milliseconds) made up of two or more time slots, wherein the basic time frame format repeats continuously. A typical receiver will monitor, decode, and process further as appropriate information contained in time slots of interest, and receive but ignore information contained in other time slots.

A need exists to accommodate antenna selection diversity in a TDM RF receiver.

### Summary of the Invention

This invention includes circuitry for developing signals related to received signal quality, such as signal strength, for at least two antennas associated with at least one of the antennas during a TDM time slot not of interest. The circuit then compares these developed signals to identify which of the antennas receives the stronger signal, and causes the receiver to use that identified antenna.

In one embodiment, all of the antennas associated with the receiver are sampled during a time slot not of interest, such that the antenna selection occurs prior to receipt of a time slot of interest.

In another embodiment, the circuitry continues to monitor received signal strength for the selected antenna during the time slot of interest, such that if the received signal strength diminishes unacceptably, the receiver can be caused to utilize an alternative antenna during the time slot of interest.

### Brief Description of the Drawings

Fig. 1 comprises a schematic diagram of a first embodiment of the invention;
Fig. 2 comprises a timing diagram associated with the first embodiment;
Fig. 3 comprises a schematic diagram of a second embodiment of the invention;
Fig. 4 comprises a timing diagram associated with the second embodiment; and
Fig. 5 comprises a schematic diagram of additional circuitry that can be utilized with either embodiment.

### Best Mode For Carrying Out the Invention

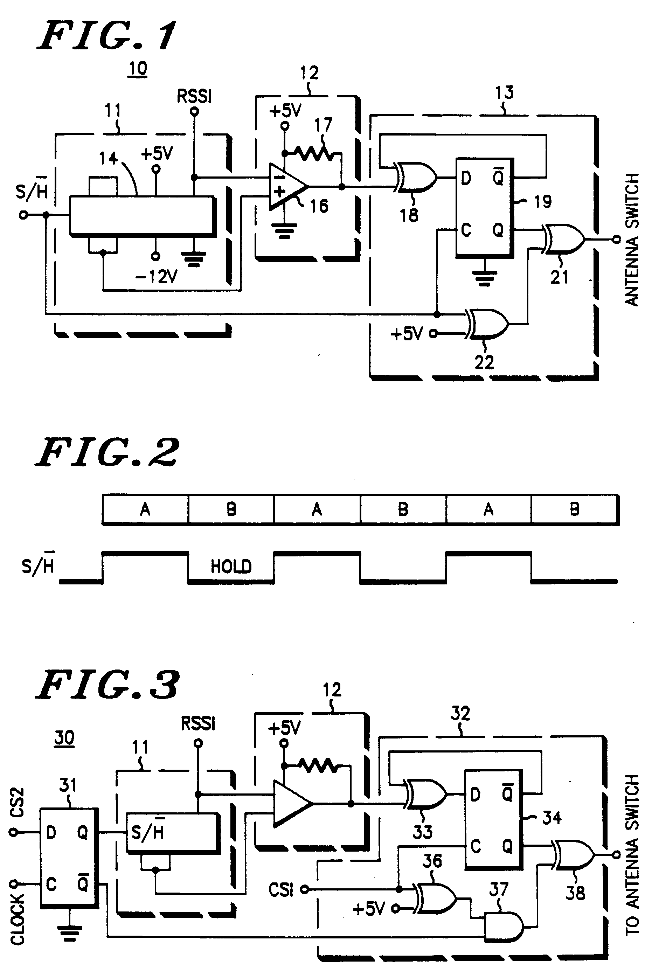

Referring now to Fig. 1, the first embodiment can be seen as depicted generally by the numeral 10. This first embodiment includes generally a sample and hold circuit (11), a comparator (12), and an antenna switch control circuit (13).

The sample and hold circuit (11) includes a sample and hold device (14) such as an AD585. The sample and hold control port connects to receive an appropriate sample and hold control signal (S/not H) as described in more detail below. The signal input port connects to receive an RSSI signal. The output ports connect to the comparator (12) as described below.

The comparator (12) can be comprised of a device such as the MC3302 (16). The non-inverting input to this device connects to receive the output of the sample and hold device (14). The inverting input connects to receive an RSSI signal. The output of the device (16) connects to a 1K ohm pull-up resistor (17) and also to one input of a first exclusive OR gate (18) that constitutes one input to the antenna switch control circuit (13).

The output of the first exclusive OR gate (18) connects to the data port of a flip-flop (19). The not Q output of the flip-flop (19) connects to the remaining input of the first exclusive OR gate (18). The Q output of the flip-flop (19) connects to one input of a second exclusive OR gate (21), the remaining input of which connects to the output of a third exclusive OR gate (22). One input of the latter connects to a positive 5 volt source and the remaining input connects to receive the S/not H signal, which produces an inverted S/not H signal, which signal also connects to the clock port of the flip-flop (19). The output of the second exclusive OR gate (21) constitutes the antenna switch output of the antenna switch control circuit (13).

Referring to Fig. 2a, a series of TDM time slots A and B can be seen, wherein slot A contains information of interest and slot B contains information not of interest to the receiver in question. Fig. 2b depicts the S/not H signal that would correspond to this arrangement. In particular, the S/not H signal as used in the first embodiment depicted in Fig. 1 would cause the sample and hold circuit (11) to sample RSSI for an antenna during a time slot containing information of interest. A comparison could then be carried out during time slots having information not of interest with respect to the antenna actually being used. A determination could then be made as to which antenna should be used for subsequent time slots containing information of interest.

Referring now to Fig. 3, an alternative embodiment can be seen as depicted generally by the numeral 30. This embodiment includes a sample and hold circuit (11) and a comparator (12) essentially as described above. Therefore, these particular sections will not be described again.

The second embodiment (30) also includes a MC14013 flip-flop (31) having its data port connected to receive a CS2 signal as described below in more detail. The clock port connects to receive an appropriate clock signal as well understood in the art. The clock rate should of course be chosen to accommodate the time slot and frame length durations of the TDM system in question. The Q output of the flip-flop (31), which provides a delayed version of the CS2 signal, connects to the S/not H port of the sample and hold circuit (11). The not Q output of the flip-flop (31) connects to the antenna switch control circuit (32) as described below in more detail.

The antenna switch control circuit (32) includes a first exclusive OR gate (33) having one input connected to receive the output of the comparator (12) and another connected to receive the not Q output of a data type flip-flop (34) associated therewith. The flip-flop (34) has its data port connected to receive the output of the first exclusive OR gate (33). The clock port of this flip-flop (34) connects to receive a CS1 signal as described below in more detail. This CS1 signal is also provided to one input of a second exclusive OR gate (36), the remaining input of which connects to a positive 5 volt source. The output of this exclusive OR gate (36) connects to one input of an AND gate (37), the remaining input of which connects to the not Q output of the first flip-flop (31) referred to above. The output of this AND gate (37) and the Q output of the second flip-flop (34) connect to both inputs of a third exclusive OR gate (38), the output of which connects to an appropriate antenna switch as well understood in the art.

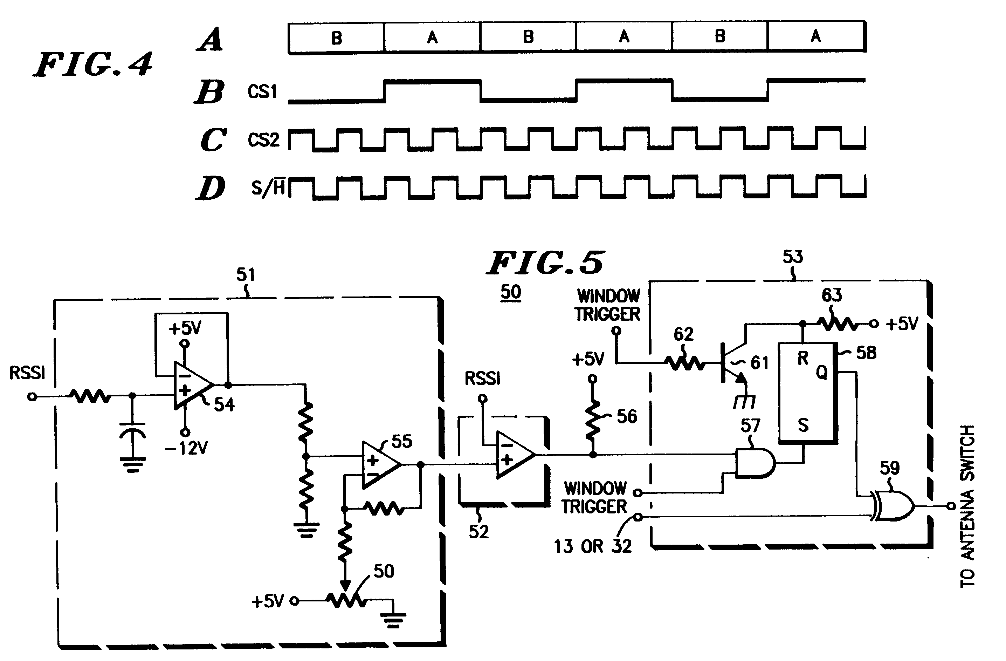

Referring now to Fig. 4a, a series of TDM time slots A and B can again be seen. An appropriate CS1 and CS2 control signal to be used in the second embodiment (30) are depicted in Figs. 4b and c. An S/not H control signal that results through provision of these control signals, in conjunction with an appropriate clock signal, is depicted in Fig. 4d.

By controlling the timing of the second embodiment (30) as depicted in Fig. 4, the second embodiment (30) will function to sample and compare RSSI values for both antennas during time slots that are not of interest, such that the decision regarding antenna selection can be made prior to receipt of a time slot of interest. With this approach, an improvement can be realized in a Rayleigh fading field with higher Doppler frequency where the time between antenna samples and the desired information slot is short.

Referring now to Fig. 5, an additional circuit which can be used in combination with either embodiment (10 or 30) can be seen as depicted generally by the numeral 50. This circuit (50) functions to allow the antenna in use during a time slot of interest to be monitored and compared against a historically determined value of antenna performance. If instantaneous antenna performance degrades sufficiently, this circuit (50) causes the receiver to switch antennas.

The circuit (50) depicted includes a reference signal unit (51), a comparator (52), and an antenna switch control circuit (53).

The reference signal circuit (51) receives an RSSI signal for the antenna in use and, through use of the operational amplifiers (54 and 55) and the 10K ohm resistors and capacitor depicted, develops an average value for the RSSI signal with respect to time. The variable resistor (50) connects to an appropriate 5 volt source, and serves to set the level below mean at which the circuit forces a switch to the alternative antenna. The output of this reference signal unit (51) connects to the noninverting input of a comparator (52), the inverting input of which connects to receive an instantaneous value representative of RSSI. The output of the comparator then connects to a 1K ohm pull-up resistor (56) and to one input of an AND gate (57) that constitutes the input to the antenna switch control circuit (53). The remaining input to the AND gate (57) connects to receive a window trigger signal, which essentially comprises the S/not H signal wherein the leading edge is delayed by 0.5 milliseconds to accommodate transients and to allow the circuitry to reach steady state conditions (when using the embodiment depicted in Fig. 3, the window trigger signal can be comprised of the CS1 signal to achieve substantially the same effect). The output of the AND gate (57) connects to the set port of a flip-flop (58), the Q output of which connects to one input of an exclusive OR gate (59), the remaining input of which connects to the antenna switch output of the antenna switch control circuit in either embodiment (13 or 32). The output of this exclusive OR gate (59) functions to provide a signal that can cause an appropriate antenna switch to switch antennas.

The reset port of the flip-flop (58) referred to above also connects to an appropriate reset circuit that includes a transistor (61) having a base connected through an 18K ohm resistor (62) to receive the window trigger signal referred to above. The emitter of this transistor connects to ground and the collector connects both to the reset port of the flip-flop (58) and through a 4.7K ohm resistor (63) to a positive 5 volt source. The reset signal forces the antenna switch to be controlled by the antenna switch control circuit (13 or 32) when the system receives a slot not of interest. When receiving the slot of interest, the antenna can be forced to switch to the alternative antenna by the flip-flop (58) based on the comparator (52).

## Claims

1. An antenna selection control circuit for use with a TDM RF receiver having a least two antennas for receiving an information signal, which information signal is comprised of time slots (A) of interest and other time slots (B) not of interest, characterized by:
A) first means (11, 51) for developing signals related to received signal quality for at least two of said antennas, wherein said signal is developed for at least one of said antennas during a time slot not of interest;
B) second means (12, 52) for comparing said developed signals to identify which of said at least two antennas received a signal of higher quality;
C) third means (13, 32, 53) responsive to said second means for causing said receiver to use said identified antenna during a subsequent time slot of interest.

2. The antenna selection control circuit of claim 1 wherein said first means develops said signals for at least two of said antennas during a time slot not of interest.

3. The antenna selection control circuit of claim 1 or 2 wherein said signal quality comprises signal strength.

4. The antenna selection control circuit of claim 2 wherein said first means includes sample and hold means (14) for sampling, during a first TDM time slot prior to a TDM time slot of interest, a first signal related to received signal quality from a selected one of said antennas and for providing an output signal related to said sampled signal.

5. The antenna selection control circuit of claim 2 and further including:
A) fourth means for comparing, during said next subsequent time slot of interest, a reference signal with a signal related to received signal quality for said used antenna, and for providing a comparison output signal related to said comparison; and
B) antenna switch control means for responding to said fourth means output signal by causing said receiver to select a different one of said antennas for receiving said signal when said signal related to received signal quality for said used antenna is less than said reference signal during said time slot of interest.

6. The antenna selection control circuit of claim 5 wherein said reference signal is related to a mean value of received signal quality for said used antenna during said time slot of interest.

7. A method of selecting an antenna for a TDM RF receiver having at least two antennas for receiving a signal of interest, which signal is comprised of time slots (A) of interest and other time slots (B) not of interest, said method characterized by the steps of:
during a time slot (B) not of interest and preceding a time slot (A) of interest:
A) sampling and holding a signal related to received signal quality for one of said antennas;
B) comparing said sampled and held signal with a second signal related to received signal quality for a second one of said antennas;
C) selecting, based upon said comparison, one of said antennas to be used to receive said signal of interest in a next occurring time slot (A) of interest.

8. The method of claim 7 and including the additional steps of:
during a time slot of interest that occurs subsequent to said time slot not of interest:
D) monitoring a signal related to received signal quality for said selected antenna;
E) comparing said monitored signal with a reference signal;
F) in response to said comparison between said monitored signal and said reference signal, deciding whether to select a different antenna.

9. The method of claim 8 wherein said reference signal is related to a mean value of received signal quality for said selected antenna during said time slot of interest.

10. The method of claim 9 wherein in step F, a decision is made to select a different antenna when said monitored signal is less than 10 dB below said reference signal.

## Patentansprüche

1. Steuerschaltung zur Antennenauswahl zur Verwendung mit einem TDM-HF-Empfänger mit mindestens zwei Antennen zum Empfang eines Informationssignals, welches aus interessierenden Zeitkanälen (A) und aus anderen, nicht-interessierenden Zeitkanälen (B) besteht, ***gekennzeichnet durch:***
A) erste Einrichtung (11, 51) zum Entwickeln von Signalen, die mit der empfangenen Signalqualität in Beziehung stehen, für mindestens zwei der Antennen, worin das Signal für mindestens eine der Antennen während eines nicht-interessierenden Zeitkanals entwickelt wird;
B) zweite Einrichtung (12, 52) zum Vergleichen der entwickelten Signale, um zu bestimmen, welche der mindestens zwei Antennen ein Signal höherer Qualität empfing;
C) dritte Einrichtung (13, 32, 53), ansprechend auf die zweite Einrichtung, zum Veranlassen des Empfängers, während eines nachfolgenden interessierenden Zeitkanals die bestimmte Antenne zu verwenden.

2. Steuerschaltung zur Antennenauswahl nach Anspruch 1, worin die erste Einrichtung die Signale für mindestens zwei der Antennen während eines nicht-interessierenden Zeitkanals entwickelt.

3. Steuerschaltung zur Antennenauswahl nach Anspruch 1 oder 2, worin die Signalqualität Signalstärke umfaßt.

4. Steuerschaltung zur Antennenauswahl nach Anspruch 2, worin die erste Einrichtung Abtast-und-Halteeinrichtung (14) enthält, um während eines ersten TDM-Zeitkanals vor einem interessierenden TDM-Zeitkanal ein erstes Signal abzutasten, das mit der empfangenen Signalqualität von einer ausgewählten der Antennen in Beziehung steht, und um ein Ausgangssignal bereitzustellen, das mit dem abgetasteten Signal in Beziehung steht.

5. Steuerschaltung zur Antennenauswahl nach Anspruch 2 und weiter umfassend:
A) vierte Einrichtung, um während des nächsten nachfolgenden interessierenden Zeitkanals ein Bezugssignal mit einem Signal zu vergleichen, das mit der empfangenen Signalqualität für die benutzte Antenne in Beziehung steht, und um ein Vergleichsausgangssignal bereitzustellen, das mit dem Vergleich in Beziehung steht; und
B) Antennenumschaltsteuereinrichtung zum Ansprechen auf das Ausgangssignal der vierten Einrichtung durch Veranlassen des Empfängers, eine andere der Antennen zum Empfangen des Signals auszuwählen, wenn das mit der empfangenen Signalqualität für die benutzte Antenne in Beziehung stehende Signal während des interessierenden Zeitkanals kleiner ist als das Bezugssignal.

6. Steuerschaltung zur Antennenauswahl nach Anspruch 5, worin das Bezugssignal mit einem Mittelwert empfangener Signalqualität für die benutzte Antenne während des interessierenden Zeitkanals in Beziehung steht.

7. Verfahren zum Auswählen einer Antenne für einen TDM-HF-Empfänger mit mindestens zwei Antennen zum Empfangen eines interessierenden Signals, welches aus interessierenden Zeitkanälen (A) und anderen, nicht-interessierenden Zeitkanälen (B) besteht, wobei das Verfahren ***gekennzeichnet*** ist durch die Schritte:
während eines nicht-interessierenden Zeitkanals (B) und vorangehend einem interessierenden Zeitkanal (A):
A) Abtasten und Halten eines Signals, das mit der empfangenen Signalqualität für eine der Antennen in Beziehung steht;
B) Vergleichen des abgetasteten und gehaltenen Signals mit einem zweiten Signal, das mit der empfangenen Signalqualität für eine zweite der Antennen in Beziehung steht;
C) Auswählen, basierend auf dem Vergleich, einer der Antennen, um benutzt zu werden, das interessierende Signal in einem nächsten auftretenden interessierenden Zeitkanal (A) zu empfangen.

8. Verfahren nach Anspruch 7 und einschließend die zusätzlichen Schritte:
während eines interessierenden Zeitkanals, der nachfolgend auf den nicht-interessierenden Zeitkanal auftritt:
D) Überwachen eines Signals, das mit der empfangenen Signalqualität für die ausgewählte Antenne in Beziehung steht;
E) Vergleichen des überwachten Signals mit einem Bezugssignal;
F) als Reaktion auf den Vergleich zwischen dem überwachten Signal und dem Bezugssignal Entscheiden, ob eine andere Antenne zu wählen ist.

9. Verfahren anch Anspruch 8, worin das Bezugssignal mit einem Mittelwert empfangener Signalqualität für die ausgewählte Antenne während des interessierenden Zeitkanals in Beziehung steht.

10. Verfahren anch Anspruch 9, worin in Schritt F eine Entscheidung getroffen wird, eine andere Antenne zu wählen, wenn das überwachte Signal weniger als 10dB unter dem Bezugssignal liegt.

## Revendications

1. Circuit de commande de sélection d'antenne destiné à une utilisation avec un récepteur TDM RF (multiplexage par répartition temporelle haute fréquence) comportant au moins deux antennes pour recevoir un signal d'information, lequel signal d'information est constitué par des fenêtres temporelles (A) dignes d'intérêt et par d'autres fenêtres temporelles (B) non dignes d'intérêt, caractérisé par :
A) un premier moyen (11, 51) pour développer des signaux concernant une qualité de signal reçu pour au moins deux desdites antennes, dans lequel ledit signal est développé pour au moins l'une desdites antennes pendant une fenêtre temporelle non digne d'intérêt ;
B) un second moyen (12, 52) pour comparer lesdits signaux développés afin d'identifier laquelle desdites au moins deux antennes a reçu un signal de qualité supérieure ; et
C) un troisième moyen (13, 32, 53) sensible audit second moyen pour forcer ledit récepteur à utiliser ladite antenne identifiée pendant une fenêtre temporelle suivante digne d'intérêt.

2. Circuit de commande de sélection d'antenne selon la revendication 1, dans lequel ledit premier moyen développe lesdits signaux pour au moins deux desdites antennes pendant une fenêtre temporelle non digne d'intérêt.

3. Circuit de commande de sélection d'antenne selon la revendication 1 ou 2, dans lequel ladite qualité de signal comprend une intensité de signal.

4. Circuit de commande de sélection d'antenne selon la revendication 2, dans lequel ledit premier moyen inclut un moyen échantillonneur bloqueur (14) pour échantillonner, pendant une première fenêtre temporelle TDM avant une fenêtre temporelle TDM digne d'intérêt, un premier signal en relation avec la qualité de signal reçu depuis l'une sélectionnée desdites antennes et pour produire un signal de sortie en relation avec ledit signal échantillonné.

5. Circuit de commande de sélection d'antenne selon la revendication 2, incluant en outre :
A) un quatrième moyen pour comparer, pendant ladite fenêtre temporelle suivante digne d'intérêt, un signal de référence à un signal concernant une qualité de signal reçu pour ladite antenne utilisée et pour produire un signal de sortie de comparaison concernant ladite comparaison ; et
B) un moyen de commande de commutation d'antenne pour répondre audit signal de sortie du quatrième moyen en forçant ledit récepteur à sélectionner l'une différente desdites antennes pour recevoir ledit signal lorsque ledit signal en relation avec la qualité de signal reçu pour ladite antenne utilisée est inférieur audit signal de référence pendant ladite fenêtre temporelle digne d'intérêt.

6. Circuit de commande de sélection d'antenne selon la revendication 5, dans lequel ledit signal de référence est rapporté à une valeur moyenne de qualité de signal reçu pour ladite antenne utilisée pendant ladite fenêtre temporelle digne d'intérêt.

7. Procédé de sélection d'une antenne pour un récepteur TDM RF comportant au moins deux antennes pour recevoir un signal digne d'intérêt, lequel signal est constitué par des fenêtres temporelles (A) dignes d'intérêt et par d'autres fenêtres temporelles (B) non dignes d'intérêt, ledit procédé étant caractérisé par les étapes de :
pendant une fenêtre temporelle (B) non digne d'intérêt et avant une fenêtre temporelle (A) digne d'intérêt :
A) échantillonnage et blocage d'un signal en relation avec la qualité de signal reçu pour l'une desdites antennes ;
B) comparaison dudit signal échantillonné et bloqué à un second signal en relation avec la qualité de signal reçu pour une seconde desdites antennes ; et
C) sélection, sur la base de ladite comparaison, de l'une desdites antennes qui doit être utilisée pour recevoir ledit signal digne d'intérêt dans une fenêtre temporelle suivante (A) digne d'intérêt.

8. Procédé selon la revendication 7, incluant les étapes supplémentaires de :
pendant une fenêtre temporelle digne d'intérêt qui se produit à la suite de ladite fenêtre temporelle non digne d'intérêt :
D) surveillance d'un signal en realtion avec la qualité de signal reçu pour ladite antenne sélectionnée ;
E) comparaison dudit signal surveillé à un signal de référence ; et
F) en réponse à ladite comparaison entre ledit signal surveillé et ledit signal de référence, prise de décision pour sélectionner une antenne différente.

9. Procédé selon la revendication 8, dans lequel ledit signal de référence est rapporté à une valeur moyenne de la qualité de signal reçu pour ladite antenne sélectionnée pendant ladite fenêtre temporelle digne d'intérêt.

10. Procédé selon la revendication 9, dans lequel lors de l'étape F, une décision est prise pour sélectionner une antenne différente lorsque ledit signal surveillé est inférieur de 10 dB audit signal de référence.
